# EUROPEAN PATENT APPLICATION

(11) **EP 0 917 342 A2**
(43) Date of publication of application: **19.05.1999**
(21) Application number: 98305556.7
(22) Date of filing: 13.07.1998
(51) Int. Cl.: H04N 1/047

(54) **Printer and scanning synchronization data calculating method therefor**

(30) Priority: 17.11.1997 KR 9760616
(71) Applicant: Samsung Electronics Co., Ltd., Suwon-city, Kyungki-do (KR)
(72) Inventor: Kim, Nam-ryoung, Kwonsung-gu, Suwon-city, Kyungki-do (KR)
(74) Representative: Chugg, David John

(57) **Abstract**

A printer and a method for calculating scanning synchronization data are provided. The printer includes a plurality of rollers (51); a photoreceptor belt (54) circulating on an endless track by and around the plurality of rollers (51) and having a transparent band (52) continuously formed in the vicinity of one edge of the photoreceptor belt (54) and at least one transparent window (53) disposed a predetermined distance from the transparent band (52), a plurality of laser scanning units (60, 70, 80, 90) disposed a predetermined distance from the photoreceptor belt (54) for scanning beams onto the photoreceptor belt (54), photodetectors (64, 74, 84, 94) for detecting beams having passed through the transparent band (52) and transparent window (53), among beams emitted from the laser scanning units (60, 70, 80, 90), and a laser scanning controller (55) for controlling the laser scanning units (60, 70, 80, 90) according to signals output from the photodetectors (64, 74, 84, 94). Also, the method for calculating scanning synchronization data for the printer includes the steps of a) adjusting the driving of the laser scanning units (50, 70, 80, 90) while circulating the photoreceptor belt (54), so that the beams emitted from the laser scanning units (60, 70, 80, 90) arrive at the photoreceptor belt (54) parallel to the travelling direction of the photoreceptor belt (54), b) calculating distances among scanning lines formed on the photoreceptor belt (54) by the beams irradiated from the laser scanning units (60, 70, 80, 90), from information on the timings at which the signals sequentially output from the photodetectors (64, 74, 84, 94) receiving the beams emitted from the laser scanning units (60, 70, 80, 90) whose driving is adjusted in the step a) and having passed through the transparent window (53) moving at a predetermined speed, and c) calculating scanning synchronization data for sequentially starting the laser scanning from the laser scanning units (60, 70, 80, 90) onto the same region of the circulating photoreceptor belt (54) with respect to the picture data for the respective colours of the identical page, from the distances among the scanning lines. Therefore, after mounting or replacing the respective laser scanning units (60, 70, 80, 90), necessary scanning synchronization data is internally calculated in the system and the simplicity of the system is enhanced.

## Description

The present invention relates to a printer and a method for calculating scanning synchronization data, and more particularly, to a printer which can control the scanning synchronization of a laser scanning unit using the photoreceptor belt track position information obtained from light irradiated from the laser scanning unit, and a method for calculating the scanning synchronization data.

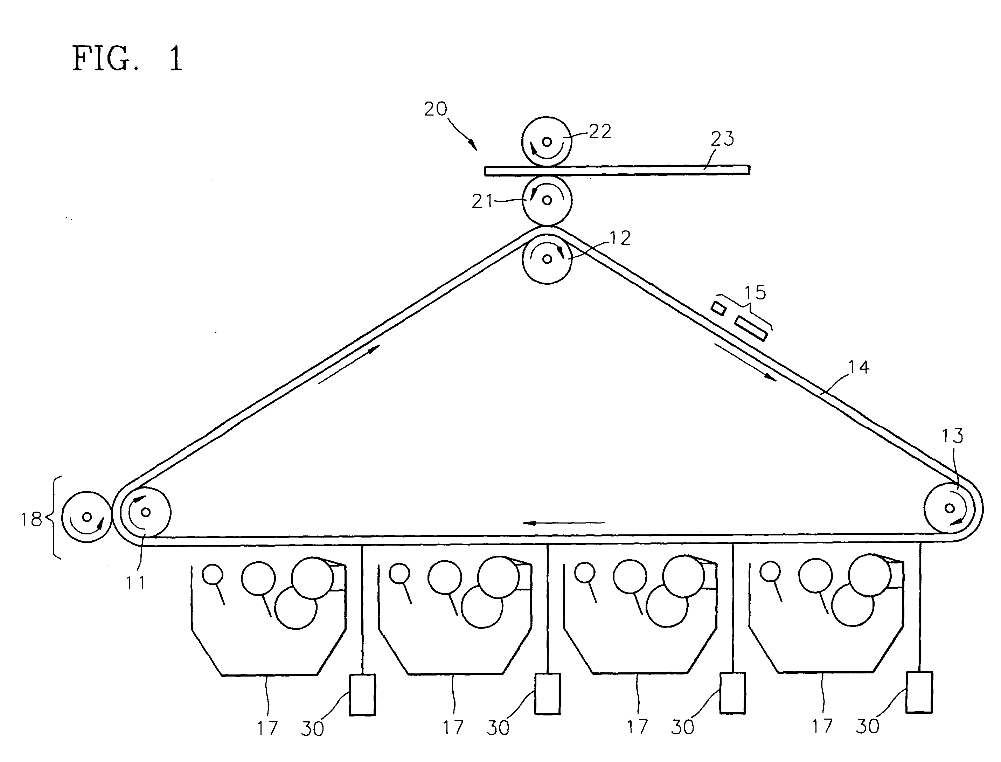

Referring to Figure 1 showing a general colour printer, a reset device 15, laser scanning units 30, development devices 17, a drying device 18 and a transfer device 20 are spaced apart by a predetermined distance in proximity with the circulating track of a circulating photoreceptor belt 14 along three rollers 11, 12 and 13.

Now, a printing procedure will be described. First, the laser scanning units 30 scan laser beams onto the photoreceptor belt 14 circulating by the reset device 15. An electrostatic latent image is formed on the photoreceptor belt 14 by the scanned beams, and the electrostatic latent image is developed by a developer liquid supplied from the development devices 17. The colour image formed on the photoreceptor belt 14 is firstly transferred to a transfer roller 21 by the continuous circulation of the photoreceptor belt 14. Subsequently, the colour image on the transfer roller 21 is secondly transferred to a sheet 23 fed between the transfer roller 21 for advancing the sheet 23 and a pressing roller 22, by the reciprocal rotation of the transfer roller 21 and the pressing roller 22 in engagement with each other.

In such a colour printer, four laser scanning units 30 installed with a predetermined distance from one another for colour image printing, sequentially scan laser beams corresponding to colours of yellow, magenta, cyan and black onto the photoreceptor belt 14. The respective development devices 17 making up a set with the respective laser scanning units 30 supply different coloured developer liquids corresponding to the colour information of the laser scanning units 30.

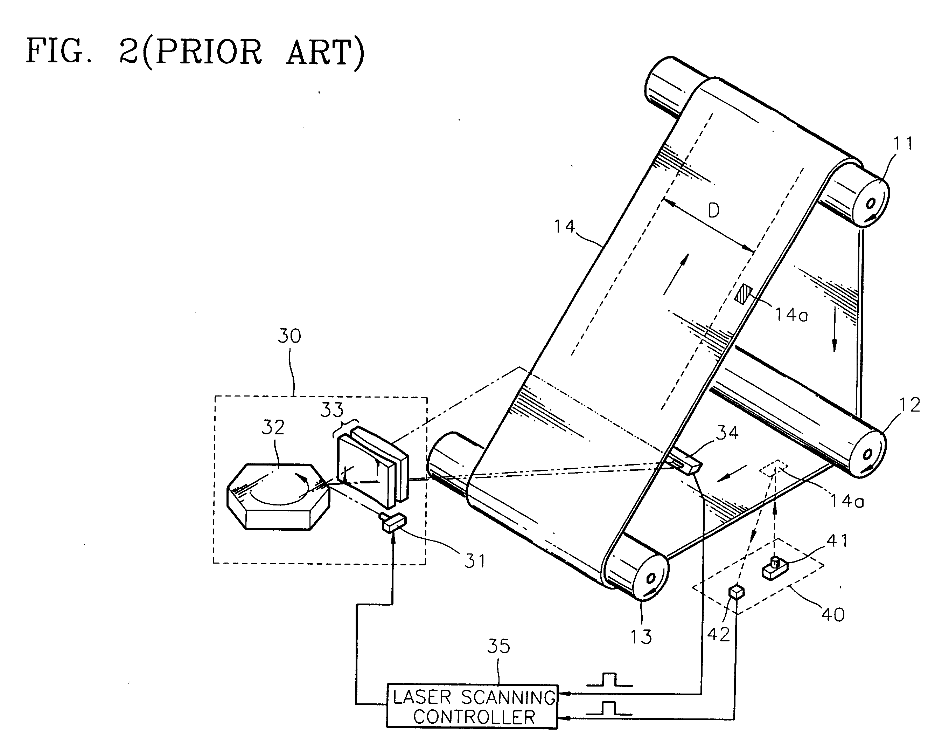

Referring to Figure 2 showing a laser scanning system of the printing shown in Figure 1, the respective laser scanning units 30 constituted by elements serving the same functions each commonly include a light source 31, a rotary polygon mirror 32 and a lens unit 33, and is installed to sequentially scan laser beams in the direction of the width of the photoreceptor belt 14.

The laser scanning system includes the laser scanning units 30, a laser scanning controller 35 for controlling the laser scanning of the laser scanning units 30, photodetectors 34 for detecting a part of the laser beams emitted from the laser scanning units 30 and supplying a photodetection signal, and a track detector 40 for supplying track position information of the photoreceptor belt 14. The track detector 40 includes a light source 41 and a photodetector 42, for detecting an identifying pattern 14a formed on a region beyond an imaging region (D) of the photoreceptor belt 14.

Now, the operation of the laser scanning system will be described. First, if a pulse signal generated by the passage of identifying patterns 14a is input from the photodetector 42 of the track detector 40 to the laser scanning controller 35, the laser scanning controller 35 determines the current track position of the photoreceptor belt 14 based on the input timing of the pulse signal of the photodetector 42. According to the determined track position, in forming the electrostatic latent image corresponding to one page of the sheet 23, the start of scanning is delayed by the time necessary for a predetermined recording start target region to reach the laser scanning position of the laser scanning units 30 on the photoreceptor belt 14, and then the laser scanning units 30 are initiated. The initiated laser scanning units 30 continuously irradiate laser beams toward the edge of the photoreceptor belt 14 from a position spaced apart from the edge. In this case, the photodetector 34 for detecting a part of the laser beams irradiated toward the edge of the photoreceptor belt 14 outputs the pulse signal corresponding to the detected light to the laser scanning controller 35. The laser scanning controller 35 determines the falling edge of the pulse signal as the timing for the light emitted from the laser scanning units 30 to reach the edge of the photoreceptor belt 14, and drives the light source 31 to emit the light signal corresponding to the image data to be printed after the time corresponding to the time from the falling edge of the pulse signal until an image scanning from the light source 31 toward the starting position of the preset imaging region D is initiated.

However, in the conventional laser scanning system, since a separate track detector 40 for checking the track position must be installed, the configuration thereof is complex. Also, since the track position of the photoreceptor belt 14 is checked just once during one circulation of the photoreceptor belt 14, if the photoreceptor belt 14 continuously circulating by the rollers 11, 12 and 13 advances at a speed slower than a predetermined movement speed set by the slip with respect to the rollers 11, 12 and 13, the laser beams irradiated from the scanning timing set in the previous printing procedure reach the position outside of the scanning target region of the photoreceptor belt 14, which makes it difficult to achieve a desired print quality.

Also, it is necessary to calculate scanning synchronization data for delay intervals of the scanning start between the respective laser scanning units 30, which is required for the identical page image data so that laser scanning for the identical page image data of different colours is sequentially performed by the laser scanning units 30 on the same region of the circulating photoreceptor belt 110.

To calculate the scanning synchronization data, it is necessary to have information on an alignment error between the respective laser scanning units 30, generated during fabrication, or in the course of mounting after repairing the used laser scanning units 30 or mounting new laser scanning units for replacement. Conventionally, after mounting the laser scanning units 30, an image having a predetermined pattern is printed and an error between the distances of patterns for the respective colours is determined visually by an examiner to then adjust the data of scanning start delay intervals.

However, since the examiner determines the error visually through the image shown in the printed matter for adjusting the scanning start delay intervals for the respective laser scanning units 30, a measurement error due to visual determination may be generated and much time is necessary.

With a view to solve or reduce the above problem, it is an aim of preferred embodiments of the present invention to provide a printer which can calculate scanning synchronization data for synchronizing the scanning of laser scanning units within the system, and a method for calculating the scanning synchronization data.

According to a first aspect of the invention, there is provided a printer including a plurality of rollers, a photoreceptor belt circulating on an endless track by and around the plurality of rollers and having a transparent band continuously formed in the vicinity of one edge of the photoreceptor belt and at least one transparent window disposed a predetermined distance from the transparent band, a plurality of laser scanning units disposed a predetermined distance from the photoreceptor belt for scanning beams onto the photoreceptor belt, photodetectors for detecting beams having passed through the transparent band and transparent window, among beams emitted from the laser scanning units, and a laser scanning controller for controlling the laser scanning units according to signals output from the photodetectors. The window may comprise a throughole.

According to another aspect of the present invention, there is provided a method for calculating scanning synchronization data for the printer including the steps of: a) adjusting the driving of the laser scanning units while circulating the photoreceptor belt, so that the beams emitted from the laser scanning units arrive at the photoreceptor belt parallel to the travelling direction of the photoreceptor belt, b) calculating distances among scanning lines formed on the photoreceptor belt by the beams irradiated from the laser scanning units, from information on the timings at which the signals sequentially output from the photodetectors receiving the beams emitted from the laser scanning units whose driving is adjusted in the step a) and having passed through the transparent window moving at a predetermined speed, and c) calculating scanning synchronization data for sequentially starting the laser scanning from the laser scanning units onto the same region of the circulating photoreceptor belt with respect to the picture data for the respective colours of the identical page, from the distances among the scanning lines. The scanning synchronization data may be obtained while the photoreceptor belt moves at a speed lower than a predetermined speed set for a normal printing operation.

For a better understanding of the invention, and to show how embodiments of the same may be carried into effect, reference will now be made, by way of example, to the accompanying diagrammatic drawings, in which:
Figure 1 is a cross-sectional view of a general colour printer;
Figure 2 is a partially extracted perspective view of the printer shown in Figure 1;
Figure 3 is a perspective view of important parts of a printer according to an embodiment of the present invention; and
Figure 4 is a timing diagram of output signals of the respective photodetectors, for explaining a method for calculating scanning synchronization data by the printer shown in Figure 3.

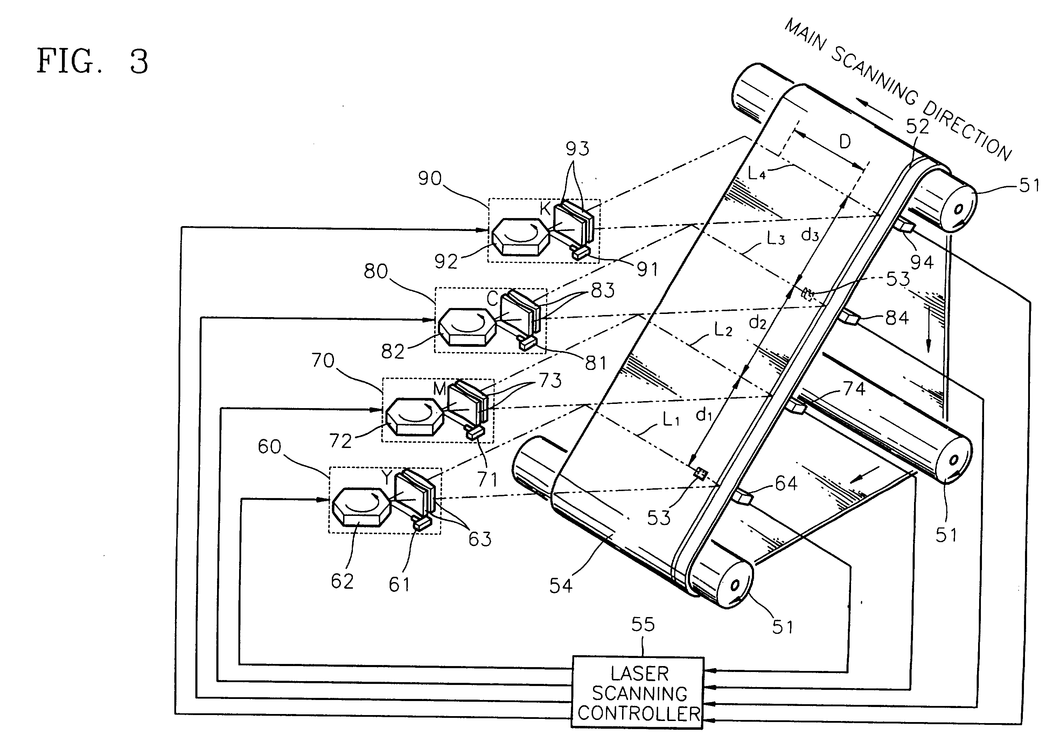

Referring to Figure 3, a printer according to the present invention includes a photoreceptor belt 54 having a transparent band 52 and a transparent window circulating by rollers 51, four laser scanning units 60, 70, 80 and 90, disposed a predetermined distance from the photoreceptor belt 54 in parallel with each other, for scanning beams, four photodetectors 64, 74, 84 and 94 disposed at the rear of the photoreceptor belt 54 paired with the respective laser scanning units 60, 70, 80 and 90, for detecting parts of beams emitted from the respective laser scanning units 60, 70, 80 and 90, and a laser scanning controller 55 for receiving outputs of the respective photodetectors 64, 74, 84 and 94 and controlling the driving of the respective laser scanning units 60, 70, 80 and 90. Although not shown, the printer includes development units, a transfer unit, a reset unit (see Figure 1).

The respective laser scanning units 60, 70, 80 and 90 scan colour information of yellow (Y), magenta (M), cyan (C) and black (K), respectively, and have the same components.

The laser scanning units 60, 70, 80 and 90 includes light sources 61, 71, 81 and 91, respectively, for irradiating light, rotary polygons 62, 72, 82 and 92 for deflecting incident light in a direction of the width of the photoreceptor belt 54, i.e., in a main scanning direction, and lens units 63, 73, 83 and 92 provided between the rotary polygons 62, 72, 82 and 92 and the photoreceptor belt 54, respectively, for focusing the laser beam deflected from the rotary polygons 62, 72, 82 and 92 onto the photoreceptor belt 54. Although not shown, collimating lenses for collimating the laser beam irradiated from the light sources 61, 71, 81 and 91, respectively, and cylindrical lenses for making the laser beam of the main scanning direction travel straight and converging the laser beam of the sub-scanning direction (the travelling direction of the photoreceptor belt 54) may be provided between the light sources 61, 71, 81 and 91, and the rotary polygon mirrors 62, 72, 82 and 92, respectively. The rotary polygon mirrors 62, 72, 82 and 92 each having a multitude of reflection planes are rotated by a driving motor (not shown) controlled by the laser scanning controller 55.

The transparent band 52 provided at a position deviated from an imaging region D set in the center of the photoreceptor belt 54 is formed of a transparent material so as to transmit incident light. The transparent band 52 is formed a predetermined width lengthwise with respect to the photoreceptor belt 54, i.e., parallel to the edge line of the same. The transparent window 53 provided a predetermined distance adjacent to the transparent band 52, is formed in the form of a throughhole or transparent material so as to transmit incident light.

The photodetectors 64, 74, 84 and 94 receive the beams passing through the transparent band 52 and the transparent window 53, among beams from the laser scanning units 60, 70, 80 and 90 disposed to correspond thereto.

In the above-constructed printer, the laser scanning controller 55 receives pulse signals output when the transparent window 53 passes through the positions of scanning lines L1 through L4 formed by the beams irradiated from the respective laser scanning units 60, 70, 80 and 90 onto the photoreceptor belt 54, according to light detection by the photodetectors 64, 74, 84 and 94, and checks the track position of the photoreceptor belt 54. Thus, a separate track detector is not necessary.

Also, the transparent band 52 is provided in the inner side of the edges of the photoreceptor 54 so that it is always maintained at a constant distance from the leading edge of the imaging region D, irrespective of the abrasion of the edges of the photoreceptor belt 54.

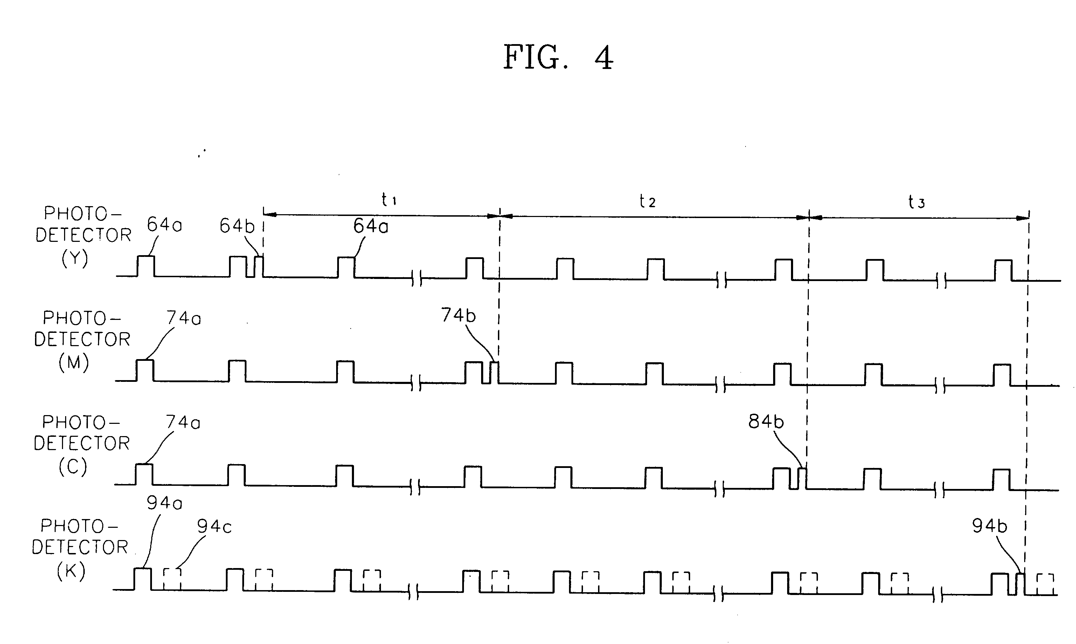

Hereinbelow, the operation of the printer according to the present invention will be described with reference to FIGs. 3 and 4.

First, whenever a beam is scanned once by the laser scanning unit 60 among the respective laser scanning units 60, 70, 80 and 90, for scanning the yellow colour information, along the scanning line in the main scanning direction with respect to the photoreceptor belt 54, the photodetector 64 periodically outputs a pulse signal 64a indicative of the detection of the beam having passed through the transparent band 52. When the transparent window 53 advances once toward the position of the scanning line L1 of the laser scanning unit 60 within one revolution cycle, the photodetector 64 outputs a pulse signal 64b corresponding to the arrival of the transparent window 53. Such operations are true of the other photodetectors 74, 84 and 94 corresponding to the laser scanning units 70, 80 and 90 for scanning magenta, cyan and black colour information.

It is preferable to determine the widths of the transparent window 52 and the transparent band 53 so that the width of the pulse signal 64a output from the photodetector 64 corresponding to the passage of the transparent band 52 is different from that of the pulse signal 54b output corresponding to the passage of the transparent window 53. This is because the passage of the transparent window 53 and transparent band 52 is discriminated more easily by the laser scanning controller 55 when the widths of the pulse signals 64b and 64a output corresponding to the beam passage of the transparent window 53 and transparent band 52 are different from each other.

The laser scanning controller 55 can check the current track position of the photoreceptor belt 54 when the pulse signals 64b, 74b, 84b and 94b corresponding to the passage of the transparent window 53 are input. The laser scanning timing of the respective laser scanning units 60, 70, 80 and 90 is controlled by the input pulse signal 64b. For example, when the transparent window 53 arrives at the position of the scanning line L1 of the laser scanning unit 60 for scanning the yellow colour information so that the pulse signal 64b corresponding thereto is input from the photodetector 64, the laser scanning controller 55 uses a falling edge of the pulse signal 64b as the page-synchronization reference signal for starting the laser scanning for one-page portion beams. Therefore, the laser scanning controller 55 determines the falling edge of the pulse signal 64a output from the photodetector 64 by the continuously scanned beams, correspondingly to the passage of the transparent band 52, after the pulse signal 64b is input, as the timing when the beam emitted from the laser scanning unit 60 arrives at the edge of the transparent band 52 of the photoreceptor belt 54. Also, the laser scanning controller 55 drives the light source 61 to emit a beam corresponding to the yellow picture data, after a predetermined time, i.e., a time corresponding to the time from the falling edge of the pulse signal 64a until an image scanning from the light source 61 toward the starting position of the imaging region D is initiated.

In the same manner, when the photodetector 74 corresponding to the laser scanning unit 70 for scanning the magenta (M) colour information outputs a pulse signal 74b indicative of the arrival of the transparent window 53 by the beam scanned by the laser scanning unit 70, the laser scanning controller 55 internally generates a page-synchronization signal indicative of the start of the page which is the same as the yellow colour information, based on the falling edge of the pulse signal 74b. Also, the laser scanning controller 55 drives the laser scanning unit 70 to emit a beam corresponding to the magenta picture data, after a predetermined time, i.e., a time corresponding to the time from the falling edge of the pulse signal 74a output from the photodetector 74 by the beam having passed through the transparent band 52 until an image scanning from the light source 71 toward the starting position of the imaging region D is initiated.

Here, if the distance d1 between the yellow scanning line L1 and the magenta scanning line L2 is not an integer multiple of the interval (to be referred to as a line pitch hereinafter) between image lines sequentially formed on the circulating photoreceptor belt 54 by the repeatedly scanning beam, the scanning timing of the laser scanning unit 70 is adjusted so that the beam for magenta colour information can be scanned on the yellow image lines previously formed on the photoreceptor belt 54. In other words, the laser scanning timing is adjusted so that the distances between the transparent band 52 and the positions of the beams simultaneously emitted from the laser scanning unit 60 for yellow colour information and the laser scanning unit 70 for magenta colour information, and arriving at the photoreceptor belt 54 are made different by compensated offset components.

The scanning timings of the laser scanning units 80 and 90 for scanning cyan (C) and black (K) colour information are also controlled by the laser scanning controller 55 in the same manner as above. As a result, the beam signals for the respective colours output from four laser scanning units 60, 70, 80 and 90 are sequentially written on the same region of the circulating photoreceptor belt 54, thereby printing a desired image.

Hereinbelow, a method for calculating scanning synchronization data for synchronizing the scanning timings of the respective laser scanning units 60, 70, 80 and 90, reflecting an alignment error between the respective laser scanning units 60, 70, 80 and 90, generated during fabrication, or in the course of remounting the respective laser scanning units 60, 70, 80 and 90 after repairing the used laser scanning units 60, 70, 80 and 90, or mounting new laser scanning units for replacement, will be described.

The alignment error between the respective laser scanning units 60, 70, 80 and 90 refers to the deviation degree of the distances d1, d2 and d3 among the scanning lines L1 through L4 formed on the photoreceptor belt 14 by the beam emitted from the mounted laser scanning units 60, 70, 80 and 90 from set values as the distances d1, d1+d2 and d1+d2+d3 between one scanning line L1 and the other scanning line L2, L3 or L4.

If the mounting positions of the laser scanning units 60, 70, 80 and 90 vary slightly during fabrication, repair or replacement, the intervals among the scanning lines L1 through L4 formed on the photoreceptor belt 54 vary accordingly. Therefore, if it is possible to measure the distance among the scanning lines L1 through L4 determined by mounted laser scanning units 60, 70, 80 and 90, the scanning synchronization data can be calculated. If the scanning synchronization data is calculated, the driving of the laser scanning units 60, 70, 80 and 90 is controlled so that beams are emitted to the same region of the circulating photoreceptor belt 54 from the laser scanning units 60, 70, 80 and 90 with respect to the picture information for the identical page.

It is preferable to provide in an operation panel (not shown) a key through which a user can command execution of a test mode for calculating the scanning synchronization data with respect to the laser scanning units 60, 70, 80 and 90 mounted after fabrication of the printer or newly mounted for replacement. If the test mode is selected, the printer calculates the scanning synchronization data in the following steps.

First, as a preparatory step, while the photoreceptor belt 54 is circulated at a predetermined speed, the respective laser scanning units 60, 70, 80 and 90 are driven so that the laser beams simultaneously emitted from the respective laser scanning units 60, 70, 80 and 90 arrive in parallel at the photoreceptor belt 54 which are disposed at equal distances widthwise based on the edge lines of the photoreceptor belt 54. In other words, the respective laser scanning units 60, 70, 80 and 90 are driven so that the output pulses 64a, 74a, 84a and 94a of the respective photodetectors 64, 74, 84 and 94 corresponding to the passage of the transparent band 52 by the beams emitted from the respective laser scanning units 60, 70, 80 and 90 are output simultaneously. At this time, the moving speed of the photoreceptor belt 54 is maintained at a speed one fourth the normal printing speed.

If the preparatory step is completed, while monitoring the output signals of the respective photodetectors 64, 74, 84 and 94, the time at which the transparent window 53 passes through the positions of the scanning lines L1 through L4 of the respective laser scanning units 60, 70, 80 and 90 is checked. In Figure 4, the time intervals among pulses 64b, 74b, 84b and 94b output from the photodetectors 64, 74, 84 and 94 corresponding to the passage of the transparent window 53 is output from the first photodetector 64, are t1, t2 and t3, respectively. In this case, the distances d1, d2 and d3 among the scanning lines L1 through L4 of the respective laser scanning units 60, 70, 80 and 90 can be calculated by the counted times t1, t2 and t3, and the moving speed of the photoreceptor belt 54 using the distances d1, d2 and d3 obtained through the above process, the scanning synchronization data for starting the sequential scanning timings of the respective laser scanning units 60, 70, 80 and 90 at the same region of the photoreceptor belt 54 with respect to the picture data of the identical page, is calculated by internal operation. To this end, first, using the scanning timing of the laser scanning unit 60 for scanning the yellow colour information, among the respective laser scanning units 70, 80 and 90, the sequential scanning start timings of the respective laser scanning units 60, 70, 80 and 90 for scanning information of magenta (M), cyan (c) and black (K) colours and the driving control data of rotary polygon mirrors 62, 72, 82 and 92 corresponding thereto are internally calculated.

Now, the calculating method will be described. First, misalignment is calculated by the remainder obtained by dividing by the line pitch adopted in printing operation the distances d1, d1+d2, and d1+d2+d3 between the scanning line L1 formed on the photoreceptor belt 54 by the laser scanning unit 60 for scanning the yellow colour information, and the other scanning lines L2 through L4 of the laser scanning units 70, 80 and 90. The next step is to obtain the driving data which differs by compensated offset values, i.e., the extent of misalignment with respect to the line pitch interval the distances between the transparent band 52 of the photoreceptor 54 and the positions of the beams simultaneously emitted from the laser scanning units 60, 70, 80 and 90 and arriving at the photoreceptor belt 54. In other words, synchronization adjusting data of the rotary polygon mirrors 62, 72, 82 and 92 is calculated for rotating the rotary polygon mirrors 62, 72, 82 and 92 while maintaining the mutually deviated state of the reflection plane of the reference rotary polygon mirror (62 corresponding to the laser scanning unit 60 for scanning yellow colour information) and the reflection plane of the other rotary polygon mirrors 72, 82 and 92 by compensated offset components.

The synchronization adjusting data of the rotary polygon mirrors 62, 72, 82 and 92 are stored in a memory device as scanning synchronization data. Then, during a normal printing operation, while the reflection planes of the rotary polygon mirrors 62, 72, 82 and 92 are maintained to be misaligned at angles corresponding to the stored data, the rotary polygon mirrors 62, 72, 82 and 92 are rotated at the same speed, the beam corresponding to the picture information is scanned on the same region of the photoreceptor belt 54, thereby obtaining a desired picture. At this time, after the pulse signals 64a, 74a, 84a and 94a output from the photodetectors 64, 74, 84 and 94 by the beams having passed through the transparent band 52 are generated, when a predetermined time corresponding to the time from the falling edge of the pulse signals 64a, 74a, 84a and 94a until an image scanning from the light source 61, 71, 81 and 91 toward the starting position of the imaging region D is initiated, the beams corresponding to the picture information of the respective colours are emitted from the respective laser scanning units 60, 70, 80 and 90.

For example, if the laser scanning unit 90 for scanning black colour information is slightly misaligned from a set position to be mounted so that the distance d1+d2+d3 between the yellow scanning line L1 and the black scanning line L4 is not an integer multiple of the line pitch interval applied to during the printing operation, the synchronization adjusting data corresponding to the deviation angle between the reflection plane of the rotary polygon mirror 92 of the laser scanning unit 90 for scanning black colour information and that of the reference rotary polygon mirror 62, i.e., by the offset component corresponding to the remainder obtained by dividing the overall distance d1+d2+d3 by the line pitch, is obtained in the above-described manner.

In the printer operated by being adjusted in its scanning synchronization by the thus-obtained synchronization adjusting data, there is no offset component so that the pulse signal 64a, 74a and 84a indicative of the passage of the transparent band 52 is output simultaneously from the photodetectors 64, 74 and 84 for yellow, magenta and cyan colour information. However, the photodetector 94 outputs a pulse signal 94c indicated by a dotted line in a delayed time compared to the output timing of the pulse signal 64a as the corresponding scanning timing is adjusted so as to compensate for the offset component.

As described above, in the laser scanning system of a printer and the scanning synchronization data calculating method according to the present invention, since the track position of a photoreceptor belt can be checked using parts of scanned beams, the number of elements necessary for checking the track position of the photoreceptor belt is reduced. Also, after mounting or replacing the respective laser scanning units, necessary scanning synchronization data is internally calculated in the system, and the simplicity of the system is enhanced.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A printer comprising:
a plurality of rollers (51);
a photoreceptor belt (54) circulating on an endless track by and around the plurality of rollers (51) and having a transparent band (52) continuously formed in the vicinity of one edge of the photoreceptor belt (54) and at least one transparent window (53) disposed a predetermined distance from the transparent band (52);
a plurality of laser scanning units (60, 70, 80, 90) disposed a predetermined distance from the photoreceptor belt (54) for scanning beams onto the photoreceptor belt (54);
photodetectors (64, 74, 84, 94) for detecting beams having passed through the transparent band (52) and transparent window (53), among beams emitted from the laser scanning units (60, 70, 80, 90); and
a laser scanning controller (55) for controlling the laser scanning units (60, 70, 80, 90) according to signals output from the photodetectors (64, 74, 84, 94).

2. The printer according to claim 1, wherein the transparent window (53) is a throughhole.

3. A method for calculating scanning synchronization data for a printer comprising a plurality of rollers (51), a photoreceptor belt (54) circulating on an endless track by and around the plurality of rollers (51) and having a transparent band (52) continuously formed in the vicinity of one edge of the photoreceptor belt (54) and at least one transparent window (53) disposed a predetermined distance from the transparent band (52), a plurality of laser scanning units (64, 74, 84, 94) disposed a predetermined distance from the photoreceptor belt (54) for scanning beams onto the photoreceptor belt (54), photodetectors (64, 74, 84, 94) for detecting beams having passed through the transparent band (52) and transparent window (53), among beams emitted from the laser scanning units (60, 70, 80, 90), and a laser scanning controller (55) for controlling the laser scanning units (60, 70, 80, 90) according to signals output from the photodetectors, the method comprising the steps of:
a) adjusting the driving of the laser scanning units (60, 70, 80, 90) while circulating the photoreceptor belt (54), so that the beams emitted from the laser scanning units (60, 70, 80, 90) arrive at the photoreceptor belt (54) parallel to the travelling direction of the photoreceptor belt (54);
b) calculating distances among scanning lines formed on the photoreceptor belt (54) by the beams irradiated from the laser scanning units (60, 70, 80, 90), from information on the timings at which the signals sequentially output from the photodetectors (64, 74, 84, 94) receiving the beams emitted from the laser scanning units (60, 70, 80, 90) whose driving is adjusted in the step a) and having passed through the transparent window (53) moving at a predetermined speed; and
c) calculating scanning synchronization data for sequentially starting the laser scanning from the laser scanning units (60, 70, 80, 90) onto the same region of the circulating photoreceptor belt with respect to the picture data for the respective colours of the identical page, from the distances among the scanning lines.

4. The method according to claim 3, wherein the scanning synchronization data is obtained while the photoreceptor belt (54) moves at a speed lower than a predetermined speed set for a normal printing operation.
